# EUROPEAN PATENT APPLICATION

(11) **EP 2 380 754 A2**
(43) Date of publication of application: **26.10.2011**
(21) Application number: 11162711.3
(22) Date of filing: 15.04.2011
(51) Int. Cl.: B60C 9/00, B60C 9/20

(54) **Hybrid cord in a belt ply for a pneumatic tire**

(30) Priority: 26.04.2010 US 767227
(71) Applicant: The Goodyear Tire & Rubber Company, Akron, OH 44316-0001 (US)
(72) Inventor: Assaad, Mahmoud Cherif, Copley, OH 44321 (US)
(74) Representative: Kutsch, Bernd

(57) **Abstract**

A pneumatic tire comprising a carcass reinforced by at least one carcass ply (12) and at least one belt ply (24) disposed radially outward of the carcass ply (12) in a crown portion of the pneumatic tire (10) is disclosed. The belt ply comprises at least one composite cord (30) having at least one first filament or yarn (34, 132) and at least one metallic filament (32, 134) wrapped together, the at least one first filament or yarn (34, 132) having a Young's modulus at room temperature less than the Young's modulus at room temperature of the at least one metallic filament (32, 134).

## Description

### Field of the Invention

The present invention is directed towards a runflat or non-runflat pneumatic tire. More specifically, the present invention is directed towards a pneumatic tire wherein a belt ply comprises a hybrid cord.

### Background of the Invention

A conventional hybrid cord, for use in a carcass ply in pneumatic tires, may be formed of two different materials: a low initial modulus core yarn and high modulus wrap yarns. The selection of the yarns is such that the "break point" of the cord (i.e., when the slope of the force versus elongation curve changes from a relatively low slope to a relatively high slope) occurs between 2% - 3% elongation, with an ultimate cord break at over 5% elongation. Another conventional hybrid carcass ply cord is formed of aramid and nylon twisted together, wherein the break point of the cord occurs between 4% - 6% elongation, with an ultimate cord break at over 10% elongation. In an overlay, the hoop reinforcing effects of a strong cord are desired. However, the hybrid cord must have elongation properties to permit the tire to expand into a toroidal shape during tire molding.

A conventional run-flat tire often has two carcass reinforcing plies and reinforcing wedge inserts in the tire sidewalls. The wedge inserts resist radial deflection of the tire with a combination of compressive and bending stresses in both the inflated, as well as uninflated, conditions. In the uninflated condition, runflat tires experience a net compressive load in the region of the sidewall closest to the road-contacting portion of the tire. The outer portions of the sidewall experience tensile forces while the inner portions of the sidewall undergo compression stresses during bending. The conventional runflat tire balances the necessary flexibility in the inflated condition with the necessary rigidity in the uninflated condition by employing two reinforcing carcass plies. The axially outermost ply has cords with a modulus of elasticity that increases with strain. The axially innermost ply has cords with a modulus that exceeds that of the outermost ply during normal loads in an inflated condition. Thus, the innermost ply supports the majority of the load during normal operation, while the outermost ply only support a minority of the load.

When the conventional run-flat tire is operated in an uninflated condition, the load is shifted from the axially innermost ply to the axially outermost ply and again the plies do not equally contribute to the support of the load. The outermost ply thereby does not contribute to the overall rigidity of the tire sidewall during normal operation in the inflated condition.

### Definitions

The following definitions are controlling for the disclosed invention.

"Axial" and "axially" are used herein to refer to lines or directions that are parallel to the axis of rotation of the tire.

"Belt structure" means one or at least two annular layers or plies of parallel cords, woven or unwoven, underlying the tread, unanchored to the bead, and preferably having cords inclined respect to the equatorial plane of the tire. The belt structure may also include plies of parallel cords inclined at relatively low angles, acting as restricting layers.

"Cable" means a cord formed by twisting together two or more plied yarns.

"Carcass" means the tire structure apart from the belt structure, tread, undertread, and sidewall rubber over the plies, but including the beads.

"Circumferential" means lines or directions extending along the perimeter of the surface of the annular tire parallel to the Equatorial Plane (EP) and perpendicular to the axial direction.

"Cord" means one of the reinforcement strands which the plies of the tire comprise.

"Cord angle" means the acute angle, left or right in a plan view of the tire, formed by a cord with respect to the equatorial plane. The "cord angle" is measured in a cured but uninflated tire.

"Denier" means the weight in grams per 9000 meters (unit for expressing linear density). Dtex means the weight in grams per 10,000 meters.

"Equatorial plane (EP)" means the plane perpendicular to the tire's axis of rotation and passing through the center of its tread.

"Fabric" means a network of essentially unidirectionally extending cords, which may be twisted, and which in turn are composed of a plurality of a multiplicity of filaments (which may also be twisted) of a high modulus material.

"High Tensile Steel (HT)" means a carbon steel with a tensile strength of at least 3400 MPa @ 0.20 mm filament diameter.

"Inner" means toward the inside of the tire and "outer" means toward its exterior.

"Lateral" means an axial direction.

"Lay length" means the distance at which a twisted filament or strand travels to make a 360 degree rotation about another filament or strand.

"Mega Tensile Steel (MT)" means a carbon steel with a tensile strength of at least 4500 MPa @ 0.20 mm filament diameter.

"Radial" and "radially" are used to mean directions radially toward or away from the axis of rotation of the tire.

"Super Tensile Steel (ST)" means a carbon steel with a tensile strength of at least 3650 MPa @ 0.20 mm filament diameter.

"Tensile" is stress expressed in forces/cross-sectional area. Strength in psi=12,800 times specific gravity times tenacity in grams per denier.

"Ultra Tensile Steel (UT)" means a carbon steel with a tensile strength of at least 4000 MPa @ 0.20 mm filament diameter.

"Yarn" is a generic term for a continuous strand of textile fibers or filaments. Yarn occurs in the following forms: 1) a number of fibers twisted together; 2) a number of filaments laid together without twist; 3) a number of filaments laid together with a degree of twist; 4) a single filament with or without twist (monofilament); 5) a narrow strip of material with or without twist.

### Summary of the Invention

The invention relates to a pneumatic tire in accordance with claim 1.

Dependent claims refer to preferred embodiments of the invention.

In one aspect of the invention, the belt ply includes at least one composite cord having at least one first yarn and at least one second metallic filament wrapped together such that the first yarn has a modulus less than a modulus of the second metallic filament.

In accordance with another aspect of the present invention, the first yarn is selected from the group consisting of: aramid, rayon, nylon, polyamide 6 and 6,6, PET, PK, and PEN.

In accordance with still another aspect of the present invention, the metallic filament is selected from the group consisting of: High, Super, Ultra, and Mega tensile steels, titanium, and aluminum, with a filament diameter in the range between 0.08 mm to 0.41 mm.

In accordance with yet another aspect of the present invention, the first yarn has a linear density value in the range between 940 dtex to 3680 dtex.

In accordance with still another aspect of the present invention, the composite cord has a structure of core yarn(s) versus outer electrically conductive filaments selected from the group consisting of: 1/1, 1/2, 1/3, and 1/4.

In accordance with yet another aspect of the present invention, the composite cord has a structure of core metallic filament(s) versus outer yarn(s) selected from the group consisting of: 1/1, 1/2, 1/3, and 1/4.

In accordance with yet another aspect of the present invention, the first yarn is aramid.

In accordance with still another aspect of the present invention, the second metallic filament is steel and/or electrically conductive.

In accordance with a preferred aspect of the invention, the tire is a pneumatic runflat tire.

### Brief Description of the Drawings

The invention will be described by way of example and with reference to the accompanying drawings in which:
FIG. 1 is a schematic representation of cross sectional view of an example tire for use with the present invention;
FIG. 2 is a schematic representation of an example carcass ply cord construction in accordance with the present invention; and
FIG. 3 is a schematic representation of another example carcass ply cord construction in accordance with the present invention.

### Detailed Description of an Example of the Present Invention

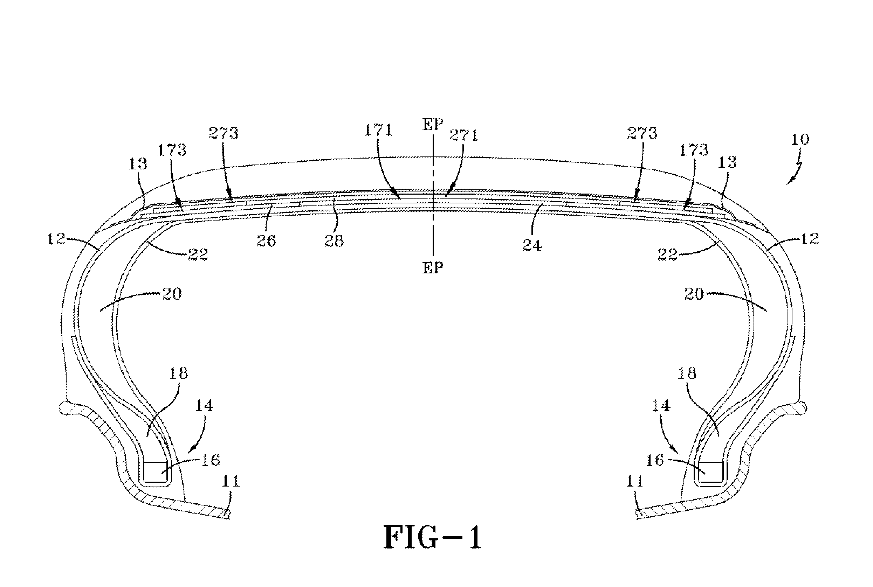

FIG. 1 is a cross-sectional view of an example pneumatic tire 10 for use with the present invention. The example tire 10 is mounted on a tire rim 11, designed to be capable of continued operation during inflated and uninflated conditions. The example tire 10 has a single reinforcing carcass ply 12 extending from one bead area 14 of the tire to an opposing bead area (not shown). The ends of the carcass ply 12 are turned axially inward to axially outward about bead cores 16 and bead apexes 18. Terminal ends of the carcass ply 12 extend past radially outer ends of the bead apexes 18 thereby enveloping the bead apexes.

Located in each sidewall region of the example tire 10 is preferably a sidewall insert 20. The sidewall insert 20 may be alternatively disposed adjacent to a tire innerliner 22 (FIG. 1) or axially outward of the carcass ply 12 (not shown). The sidewall insert 20 is formed of elastomeric material and may extend from a crown area of the example tire 10, from radially inward of a belt reinforcement structure 24 to radially inward of terminal ends of the bead apexes 18. The elastomeric material of the sidewall insert 20, or wedge, is selected to provide the example tire 10 with support during uninflated, or runflat, operation of the tire.

The belt reinforcement structure 24, disposed radially outward of the carcass ply 12, may have at least two inclined, crossed cord plies. The cords of the inclined plies are preferably inclined with respect to a circumferential direction of the example tire 10. The cords of radially adjacent plies are further preferably inclined at similar, but opposing, angles to each other. The belt reinforcement structure 24 may comprise a first inner ply 26 and a second outer ply 28. The first radially inner ply 26 may be segmented with a center portion 171 interconnecting two axially outer portions 173. The second radially outer ply 26 may be segmented with a center portion 271 interconnecting two radially outer portions 273.

Outward of the belt reinforcement structure 24 may be an overlay 13. The overlay 13 may have an axial width equal to, or greater than, a maximum axial width of the crossed cord plies of the belt reinforcement structure 24, thereby encapsulating the crossed cord plies between the overlay 13 and the carcass ply 12. The overlay may be reinforced with cords inclined at angles of 0°- 15° relative to an equatorial plane EP of the example tire 10.

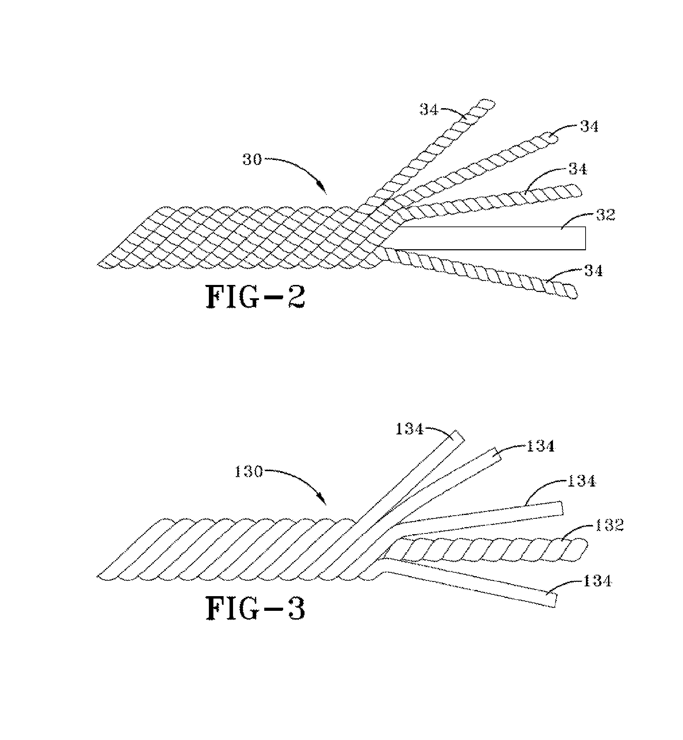

In accordance with the present invention, the belt reinforcement structure 24 is formed from at least one example cord 30 as seen in FIG. 2. The example cord 30 is a composite, or hybrid, cord made of yarns and electrically conductive filaments of appropriate characteristics to provide a runflat, low rolling resistance, or high performance tire, such as the example tire 10. The cord 30 may be formed of at least one (one shown) coated conductive steel filament 32 about which is twisted at least one (four shown) low modulus aramid core yarns 34.

In accordance with the present invention, the belt reinforcement structure 24 may be formed from at least one other example cord 130 as seen in FIG. 3. The example cord 130 is a composite, or hybrid, cord made of yarns and electrically conductive filaments of appropriate characteristics to provide a runflat, low rolling resistance, or high performance tire, such as the example tire 10. The cord 130 may be formed of at least one (one shown) low modulus aramid core yarn 132 about which is twisted at least one (four shown) coated conductive steel filament 134.

Suitable materials for the low modulus yarn(s) 34, 132 include aramid, rayon, nylon polyamide 6 and 6,6, polyethylene terephthalate (PET), and polyethylene napthalate (PEN). Suitable materials for the high modulus conductive filament(s) 32, 134 include High Tensile Steel, Super Tensile Steel, Ultra Tensile Steel, Mega Tensile Steel, titanium, stainless steel, aluminum, as well as any other suitable electrically conductive material.

Material selection is based on the desired stress/strain characteristics and electrical conductivity of the hybrid cord 30, 130 as a whole. However, a typical characteristic is that the conductive filament(s) 32, 134 have a Young's moduli greater than the yarn(s) 34, 132. Thus, for example, the outer wrap conductive filament(s) 134 of Fig. 3 may be Super tensile steel with rayon core yarn(s) 132 or the outer wrap metallic filament(s) may be titanium with polyamide 6 core yarn(s).

The number of low modulus yarns 34, 132 is preferably no greater than five while the number of high modulus outer wrap metallic filaments is preferably no greater than ten. For example, the number of low modulus yarns 34, 132 versus high modulus conductive filaments 32, 134 in the cord 30, 130 may be 1 /1, 1/2, 2/1, 2/2, 3/2, 1/3, 2/3, 3/3 or 4/3. FIG. 2 illustrates a 1/4 construction with a single core metallic filament 32 and four outer wrap yarns 34. FIG. 3 illustrates a 1/4 construction with a single core yarn 132 and four conductive filaments 134.

In the example cord 130 (Fig. 3), each of the core yarn(s) 132 may be twisted a given number of turns per unit of length, usually expressed in turns per inch (TPI). Additionally, the core yarn 132 may be twisted and the outer filaments 134 may be twisted about the core yarn a given number of turns per unit of length (TPI) for the yarns and lay lengths, such as between 3 mm and 25 mm. The direction of twist refers to the direction of slope of the spirals of a yarn, metallic filament, or cord when it is held vertically.

Visually, if the slope of the spirals appears to conform in direction to the slope of a letter "S," then the twist is termed "S" or "left handed." If a slope of the spirals appears to visually conform in direction to the slope of a letter "Z," then the twist is termed "Z" or "right handed." An "S" or "left handed" twist direction is understood to be a direction opposite to a "Z" or "right handed" twist. "Twist" is understood to mean the twist imparted to a yarn or filament/yarn component before the yarn or filament/yarn component is incorporated into a cord. "Cord twist" is understood to mean the twist imparted to two or more yarns and filaments/yarns when twisted together with one another to form the cord. "Dtex" is understood to mean the weight in grams of 10,000 meters of a yarn before the yarn has a twist imparted thereto.

For example, core yarn(s) 132, such as polyester or polyamide (nylon), with a diameter of 0.012 to 0.035 inches and a twist of 5-15 TPI, may be helically wrapped with conductive filaments(s) 134, such as titanium, stainless steel, with a 50-80 micrometer metallic or organic coating for adhesion to rubber (Fig. 3). The metallic filament(s) may have twists of S, Z, or S & Z, and additional filaments 134 at 3-14 TPI lay lengths. Such a cord 130 in a belt reinforcement structure 24 thus produces good fatigue performance. The belt ply targets may be Young's Modulus > 5000 MPa at 100°C, 100 % Adhesion, and glass transition (tg) > 85°C for a gauge less than 0.22 inches (0.56 mm). The adhesion coating may be materials such as brass, copper, an organic silane, or a Chem-lock metal adhesive from Lord Chemical to improve rubber adhesion.

The axially outer portions 173, 273 of the belt plies 26, 28 may comprise the composite cords 30, 130 and the center portions 171, 271 may comprise a homogenous structure such as steel cords. The composite cords 30, 130 of the outer portions 173, 273 may thereby provide added flexibility to the lateral edges of the crown portion of the tread as well as reducing overall weight of the pneumatic tire 10.

As stated above, a belt reinforcement structure 24 of hybrid cords 30 in accordance with the present invention produces excellent fatigue performance in a tire 10 as well as allowing use of harder, less conductive materials in other parts of the tire 10 for improved RR. This belt reinforcement structure 24 thus enhances the performance of the tire 10, even though the complexities of the structure and behavior of the pneumatic tire are such that no complete and satisfactory theory has been propounded. Temple, Mechanics of Pneumatic Tires (2005). While the fundamentals of classical composite theory are easily seen in pneumatic tire mechanics, the additional complexity introduced by the many structural components of pneumatic tires readily complicates the problem of predicting tire performance. Mayni, Composite Effects on Tire Mechanics (2005). Additionally, because of the non-linear time, frequency, and temperature behaviors of polymers and rubber, analytical design of pneumatic tires is one of the most challenging and underappreciated engineering challenges in today's industry. Mayni.

A pneumatic tire has certain essential structural elements. United States Department of Transportation, Mechanics of Pneumatic Tires, pages 207-208 (1981). An important structural element is the belt reinforcement structure, typically made up of many flexible, high modulus cords of natural textile, synthetic polymer, glass fiber, or fine hard drawn steel or other metal embedded in, and bonded to, a matrix of low modulus polymeric material, usually natural or synthetic rubber. Id. at 207 through 208.

The flexible, high modulus cords are usually disposed as a single layer. Id. at 208. Tire manufacturers throughout the industry cannot agree or predict the effect of different twists of belt reinforcement structure on noise characteristics, handling, durability, comfort, etc. in pneumatic tires, Mechanics of Pneumatic Tires, pages 80 through 85.

These complexities are demonstrated by the below table of the interrelationships between tire performance and tire components.

| | LINER | CARCASS PLY | APEX | BELT | OV'LY | TREAD | MOLD |
|---|---|---|---|---|---|---|---|
| | | | | | | | |
| TREADWEAR | | | | X | | X | X |
| NOISE | | X | X | X | X | X | X |
| HANDLING | | X | X | X | X | X | X |
| TRACTION | | | | | | X | X |
| DURABILITY | X | X | X | X | X | X | X |
| ROLL RESIST | X | | X | X | | X | X |
| RIDE COMFORT | X | X | X | | | X | |
| HIGH SPEED | | X | X | X | X | X | X |
| AIR | X | | | | | | |
| RETENTION | | | | | | | |
| MASS | X | X | X | X | X | X | X |

As seen in the table, belt reinforcement structure cord characteristics affect the other components of a pneumatic tire (i.e., belt reinforcement structure affects apex, carcass ply, overlay, etc.), leading to a number of components interrelating and interacting in such a way as to affect a group of functional properties (noise, handling, durability, comfort, high speed, and mass), resulting in a completely unpredictable and complex composite. Thus, changing even one component can lead to directly improving or degrading as many as the above ten functional characteristics, as well as altering the interaction between that one component and as many as six other structural components. Each of those six interactions may thereby indirectly improve or degrade those ten functional characteristics. Whether each of these functional characteristics is improved, degraded, or unaffected, and by what amount, certainly would have been unpredictable without the experimentation and testing conducted by the inventors.

Thus, for example, when the structure (i.e., twist, cord construction, etc.) of the belt reinforcement of a pneumatic tire is modified with the intent to improve one functional property of the pneumatic tire, any number of other functional properties may be unacceptably degraded. Furthermore, the interaction between the belt reinforcement and the apex, carcass ply, overlay, and tread may also unacceptably affect the functional properties of the pneumatic tire. A modification of the belt reinforcement structure may not even improve that one functional property because of these complex interrelationships.

Thus, as stated above, the complexity of the interrelationships of the multiple components makes the actual result of modification of a belt reinforcement structure 24, in accordance with the present invention, impossible to predict or foresee from the infinite possible results. Only through extensive experimentation have the belt reinforcement structure 24 and cords 30, 130 of the present invention been revealed as an excellent, unexpected, and unpredictable option for a pneumatic tire.

## Claims

1. A pneumatic tire comprising a carcass reinforced by at least one carcass ply (12), and at least one belt ply (24) disposed radially outward of the carcass ply (12) in a crown portion of the pneumatic tire (10), the belt ply comprising at least one composite cord (30) having at least one first filament or yarn (34, 132) and at least one metallic filament (32, 134) wrapped together, the at least one first filament or yarn (34, 132) having a Young's modulus at room temperature less than the Young's modulus at room temperature of the at least one metallic filament (32, 134).

2. The pneumatic tire of claim 1 wherein the at least one first filament or yarn (34, 132) has a diameter in the range of from 0.3 mm to 0.9 mm, alternatively from 0.45 to 0.75 mm, and a twist in the range of from 5 to 15 turns per 2.54 cm (TPI); and wherein the at least one metallic filament (32, 134) is wrapped together with the at least one first filament or yarn (34, 132) with a twist in the range of from 3 to 14 turns per 2.54 cm (TPI).

3. The pneumatic tire of claim 1 or 2 wherein the at least one first filament or yarn (34, 132) is selected from the group consisting of: aramid, rayon, nylon, polyamide 6, polyamide 6,6, polyethylenterephthalat (PET), polyketone (PK), and polyethylene naphthalate (PEN).

4. The pneumatic tire of claim 1, 2 or 3 wherein the at least one metallic filament (32, 134) is selected from the group consisting of: high tensile steel, super tensile steel, ultra tensile steel, mega tensile steel, titanium, a titanium alloy, aluminum, and an aluminium alloy.

5. The pneumatic tire of at least one of the previous claims wherein the at least one metallic filament (32, 134) has a filament diameter in the range of from 0.04 mm to 0.41 mm, alternately from 0.1 mm to 0.25 mm.

6. The pneumatic tire of at least one of the previous claims wherein the at least one first filament or yarn (34, 132) has a linear density value in the range of from 940 dtex to 3680 dtex, alternatively from 1500 dtex to 3000 dtex or from 1800 dtex to 2500 dtex.

7. The pneumatic tire of at least one of the previous claims wherein the cord (30, 130) has a structure of core filament(s) or yarn(s) (132) versus outer metallic filament(s) (134) selected from the group consisting of: 1/1, 1/2, 1/3 and 1/4.

8. The pneumatic tire of at least one of the previous claims wherein the cord (30, 130) has a structure of core metallic filament(s) (32) versus outer first filament(s) or yarn(s) (34) selected from the group consisting of: 1/1, 1/2, 1/3 and 1/4.

9. The pneumatic tire of at least one of the previous claims wherein the belt ply (13) has an end count of cord ends per 2.54 cm in the range of from 15 to 32, alternatively from 20 to 28.

10. The pneumatic tire of at least one of the previous claims wherein the first filament or yarn (34, 132) is aramid and/or wherein the at least one metallic filament (32, 134) is steel.

11. The pneumatic tire of at least one of the previous claims further comprising an overlay (13) disposed radially outward of the belt ply (24), the overlay (13) preferably having an axial width greater than the axial width of the belt ply (24) or the axially widest belt ply (24) thus encapsulating the belt ply (24) between the carcass ply (12) and the overlay (13).

12. The pneumatic tire of at least one of the previous claims wherein the cords in the overlay (13) make an angle in a range of from 0 ° to 15°, alternatively 0.5 ° to 5°, with respect to the equatorial plane (EP) of the tire (10).

13. The pneumatic tire of at least one of the previous claims wherein:
(i) the composite cord (30, 130) consists of a single metallic filament (32) and at least one aramid yarn (34), preferably a plurality of aramid yarns such as 3, 4 or 5 aramid yarns, wrapped about the single metallic filament (32); or
(ii) the composite cord (30, 130) consists of a single aramid yarn (132) and at least one metallic filament (134), preferably a plurality of metallic filaments (134) such as 3, 4 or 5 metallic filaments, wrapped about the single aramid yarn (132).

14. The pneumatic tire of at least one of the previous claims wherein each of the at least one metallic filaments (32, 134) is coated with an organic or a metallic coating such as a brass, copper, an organic silane, or an other coating providing an improved adhesion between the filament (32, 134) and a rubber ply material, the coating preferably having a thickness in a range of from 50 µm to 80 µm.

15. The pneumatic tire of at least one of the previous claims wherein the at least one first filament or yarn (34, 132) has a Young's modulus at room temperature which is at least 50% less, alternatively at least 70% or at least 90% less, than the Young's modulus at room temperature of the at least one metallic filament (32, 134).
